# EUROPEAN PATENT SPECIFICATION

(11) **EP 4 224 312 B1**
(45) Date of publication and mention of the grant of the patent: **13.08.2025**
(21) Application number: 23153284.7
(22) Date of filing: 25.01.2023
(51) Int. Cl.: G06F 8/65, B60R 16/023, B60R 16/03

(54) **UPGRADABLE VEHICLE ELECTRONICS SYSTEM, UPGRADE MODULE AND ASSOCIATED METHOD**
UPGRADBARES FAHRZEUGELEKTRONIKSYSTEM, UPGRADE-MODUL UND ZUGEHÖRIGES VERFAHREN
SYSTÈME ÉLECTRONIQUE DE VÉHICULE ÉVOLUTIF, MODULE DE MISE À NIVEAU ET PROCÉDÉ ASSOCIÉ

(30) Priority: 02.02.2022 GB 202201323
(43) Date of publication of application: 09.08.2023
(73) Proprietor: Aptiv Technologies AG, 8200 Schaffhausen (CH)
(72) Inventor: NEUMANN, Markus, Dublin, 2 (IE); WELSCH, Tim, Dublin, 2 (IE)
(74) Representative: Lewis Silkin LLP

(56) References cited:
- US-A1- 2010 128 890
- ANONYMOUS: "CarPlay", EN.WIKIPEDIA.ORG, 23 January 2022 (2022-01-23), XP093054325, Retrieved from the Internet <URL:https://en.wikipedia.org/w/index.php?title=CarPlay&oldid=1067385642> [retrieved on 20230614]
- ANONYMOUS: "Qi_(standard)", EN.WIKIPEDIA.ORG, 25 January 2022 (2022-01-25), XP093054328, Retrieved from the Internet <URL:https://en.wikipedia.org/w/index.php?title=Qi_(standard)&oldid=1067766907> [retrieved on 20230614]
- BMW USA: "Wireless Charging Tray | BMW Genius How-To", 15 November 2016 (2016-11-15), XP093054399, Retrieved from the Internet <URL:https://www.youtube.com/watch?v=nuT5ErRxvDY> [retrieved on 20230614]

## Description

### Introduction

The present disclosure relates to an upgradeable vehicle electronics system, and an upgrade module for use with the same, and a method for upgrading a vehicle electronics system. The present disclosure is particularly relevant to upgradable automotive infotainment systems and other such vehicle multimedia units that allow for plug and play modules to provide extended functionality.

### Background

Vehicle multimedia units (MUs) have become an increasingly important part of modern vehicles for implementing infotainment and user experience (UX) applications for both drivers and passengers. However, the innovation cycles for such UX applications are significantly faster than a typical vehicle lifetime. As such, new UX applications will often require ever greater hardware capabilities and performance, such as processing power and memory, which were not available or considered necessary at the time the MU and vehicle was designed or manufactured. This means that a vehicle can become out of date in the market prematurely purely because its MU lacks the hardware capabilities to run the latest MU software.

Typically, it is not practical to upgrade a modern vehicle's MU entirely because of the complexity of its integration into the vehicle, both in terms of the MUs communications with other electronic control units (ECUs) in the vehicle and the hardwired physical connections used to establish those communications. Consideration has therefore been made to provide MUs with upgrade ports available to allow extension boards and units to be physically connected to the MU to upgrade its hardware specifications at a later date. As such, an MU installed in the vehicle at its production time may function as a base system for delivering the base UX applications available at the time of manufacture. In some instances, this base MU will incorporate a basic extension module connected to a connector port which can then be replaced by an upgraded module in the future. Alternatively, an MU may include an empty port that can receive a upgrade module which functions in combination with the existing processing systems.

To establish the communications between the module and the base unit, board-to-board connections, such as PCIe connectors, or harness connectors, such as USB connectors, have been proposed. This is because such connections allow for the very high data rates needed to implement UX applications. However, testing has shown that such connectors can become unreliable in vehicle applications, and most particularly in automotive applications. Specifically, such connection protocols use high-speed electrical signals transmitted through tiny electrical contacts between the module and base. However, the quality and reliability of these contacts can be compromised by humidity, dirt and electrostatic discharge contamination. Furthermore, vibrations of the vehicle, particularly in automotive applications, can cause mechanical stress on the connectors, resulting in loose connections over time. In addition, the fragility of the connectors means that they are susceptible to critical damage during handling. As such, upgrade operations cannot be reliably undertaken by end customers. This thereby means that a customer would need to take their vehicle to a specialist garage to perform the upgrade. The combination of these factors make any conventional upgrade systems expensive and impractical. As such, known vehicle MUs do not allow for straightforward hardware upgrades during their lifetime.

Accordingly, there remains a need to address the above shortcomings in conventional MUs and UX systems.

US 2010/128890 A1 discloses a modular automotive multimedia and telematic extension unit and head unit.

### Summary

According to a first aspect, there is provided an upgradable vehicle electronics system including: a base unit being operable in combination with an upgrade module; a power transmitter for delivering power to the upgrade module; a base wireless data transceiver for wireless communication between the base unit and the module; and a module locator comprising a receptacle for receiving and securing the module; wherein the power transmitter and the base wireless data transceiver are positioned relative to the module locator such that when the module locator receives and secures the module, a power receiver on the module is aligned with the power transmitter to receive power therefrom and a module wireless data transceiver on the module is aligned with the base wireless data transceiver for wireless communication therebetween.

In this way, an electronics system, such as a multimedia unit, may be upgraded within a vehicle without needing to replace the base unit. Accordingly, additional hardware components, such as Systems on a Chip (SoC), processors, and memory contained within an upgrade module, may be communicatively connected to operate in conjunction with the base unit. Moreover, this can be achieved by simply locating the module on the module locator, such as a receptacle, platform or docking location. Furthermore, as communications are established wirelessly, the datalink between the upgrade module and the base unit is not subject to the limitations of a physical electrical connection between the parts. Consequently, it is much more tolerant to mechanical displacement, and in turn locational displacement and vibrational movements. The wireless datalink is also more tolerant to the presence of contaminants and humidity. As a result, reliability of the datalink during operating conditions is much more robust and connection of the upgrade module does not necessitate specialist training. In automotive electronics systems, this may be especially advantageous because multimedia units can be upgraded to provide new functionality during the vehicle's lifespan, and such upgrades may be undertaken by end customers. This reduces costs and allows an up to date user experience to be continually provided.

In embodiments, the vehicle electronics system further includes the module.

In embodiments, the base unit includes a plurality of base electronic components for implementing base electronic functions and, when the module is located in the module locator, upgrade electronic components in the module are operable in combination with the base electronic components for implementing upgraded electronic functions. In this way, components within the module may operate in combination with existing components in the base unit, which already provided basic functionality, but together may provide additional or enhanced functionality. As such, a vehicle may be manufactured with a base unit, and upgrade modules may be added in time, depending on an end customers requirements.

In embodiments, the power transmitter is a wireless power transmitter. In this way, no physical electrical connections are required between the module and the base unit. Consequently, the parts may be functionally coupled without requiring precise physical connection between electrical terminals. At the same time, the module may be provided as an enclosed or sealed unit, allowing for improved integrity and reliability under operating conditions. The wireless power transmitter may, for example, utilise inductive coupling, resonance coupling, or capacitive coupling.

In embodiments, the wireless power transmitter includes a data transfer modulator for transferring data between the power receiver and the power transmitter. In this way, an additional data link can be established between the module and the base unit. Usefully, because data may be transmitted through the wireless power coupling, it may be used for transmitting initialisation data during boot up of the components in the module.

In embodiments, the receptacle may be provided as a slot or dock, or keying formations on a platform for orientating the module. In embodiments, a retainer may be provided for securing the module in the module locator. For example, a magnetic retainer or clip may be used. In embodiments, the module locator comprises a receptacle dimensioned for receiving the module such that the module is retained in an aligned position for the power transmitter and the base wireless data transceiver.

In embodiments, the module locator further includes a cooling surface for absorbing heat from the module. In this way, waste heat generated by the components within the module during operation may be transferred away from the module into the module locator. This helps to maintain operation of the components and provides for heat spreading to avoid hotspots. In embodiments, the cooling surface may include a heat sink, a heat pipe, a heat spreader, or coolant conducting channels. In embodiments, the cooling surface may be formed of a heat transfer material, such as aluminium.

In embodiments, the cooling surface is located for absorbing heat from a heat dissipation region of the module when the module is located in the module locator. In this way, the cooling surface may be positioned so that it mates with the heat dissipation region of the module to ensure a high heat transfer efficiency. In embodiments, the heat dissipation region may be formed of a heat transfer material, such as aluminium.

In embodiments, the base wireless data transceiver comprises a plurality of antennas for communication with a plurality of antennas of the module wireless data transceiver using a Multiple-Input Multiple-Output method. In this way, multiple antennas may be used in combination in a MIMO method to increase data transfer rates between the base unit and module. In embodiments, the antennas of the base wireless data transceiver may be spatially distributed around the module for controlling cross correlation.

In embodiments, the base and module wireless data transceivers communicate using one of a radio-frequency link, a wireless personal area network, a microwave link, an optical link, and a two digit GHz data link. In this way, a high-speed, low latency, wireless datalink may be established.

In embodiments, the vehicle electronics system further includes a module receiving part for housing the power transmitter, the base wireless data transceiver, and the module locator, and wherein the module receiving part is electrically connected to the base unit through a cable connector. In this way, the module receiving part may be located away from the base unit. For example, the module may be provided in a location separate to the base unit. For instance, it may be hidden away or alternatively provided in a prominent location to facilitate ease of access. In automotive applications, for instance, this may allow the base unit to be located in a central console to provide the driver with convenient access, without the module locator for the module occupying valuable dashboard real estate. In other embodiments, the receiving part may be incorporated into the base unit. For example, the base unit may include a slot for receiving an module.

According to a second aspect, there is provided an upgrade module for an upgradable vehicle electronics system comprising: a power receiver for receiving power from the system; and a module wireless data transceiver for wireless communication between the upgrade module and a base unit of the system, the base unit being operable in combination with the upgrade module, wherein the upgrade module is configured to be inserted into and secured by a module locator of the base unit, and the power receiver and the module wireless data transceiver are located on the module such that, when the upgrade module is secured by the module locator, the power receiver is aligned with a power transmitter of the system to receive power therefrom and the module wireless data transceiver is aligned with a base wireless data transceiver for wireless communication therebetween. In this way, a modular system may be provided for upgrading functionality in a vehicle electronics system. For example, new or extended UX functions may be provided to an existing MU through the addition of the upgrade module.

In embodiments, the module may be provided as a sealed unit. In this way, an enclosed, self-contained, upgrade module may be provided, whilst, at the same time, allowing for improved integrity and reliability under operating conditions.

In embodiments, the power receiver is a wireless power receiver. In embodiments, the power receiver includes a data transfer modulator and demodulator for transferring data between the power receiver and the power transmitter. In this way, an additional data link can be established between the upgrade module and the base unit. In such embodiments, the power transmitter may also include a data transfer modulator and demodulator for transferring data between the power receiver and the power transmitter.

In embodiments, the upgrade module further includes a heat dissipation region for conducting heat from components in the upgrade module to a cooling surface provided in the module locator when the upgrade module is located in the module locator. In this way, the upgrade module may include an integral heat dissipation mechanism for transferring heat away from components within the module.

In embodiments, the upgrade module further includes a rechargeable energy store for powering components within the module prior to the power receiver receiving power from the system.

According to a third aspect, there is provided a method of upgrading a vehicle electronics system including the steps of: providing an upgrade module having a power receiver and a module wireless data transceiver; providing a base unit operable in combination with the upgrade module, a power transmitter, a base wireless data transceiver, and a module locator for the upgrade module wherein the module locator comprises a receptacle for receiving and securing the upgrade module; and locating the upgrade module on the module locator; wherein the power transmitter and the base wireless data transceiver are positioned relative to the module locator such that when the module locator receives and secures the upgrade module. a power receiver on the module is aligned with the power transmitter for receiving power therefrom and a wireless data transceiver on the module is aligned with the base wireless data transceiver for wireless communication therebetween.

In embodiments, the method further comprises the steps of: transmitting power from the power transmitter to the power receiver for powering components in the upgrade module; modulating the power transmitted for transferring initialisation data between the power receiver and the power transmitter; processing the initialisation data using the powered components in the upgrade module; and activating the module wireless data transceiver based on the processed initialisation data to establish wireless communications with the base wireless data transceiver. In this way, the wireless power coupling may be used as an additional data link for transmitting initialisation data during boot up of the components in the upgrade module, which in turn may allow the parameters for the high-speed datalink to be established.

### Brief Description of Drawings

Illustrative embodiments will now be described with reference to the accompanying drawings in which:
Figure 1 is a cross sectional schematic illustration of an upgradeable vehicle electronics system according to a first embodiment, with the upgrade module separated from the base unit;
Figure 2 is a cross sectional schematic illustration of the upgradeable vehicle electronics system shown in Figure 1 with the upgrade module inserted into the base unit;
Figure 3 is a simplified block diagram of the upgradeable vehicle electronics system of the first embodiment;
Figure 4 is a cross sectional schematic illustration of an upgradeable vehicle electronics system according to a second embodiment;
Figure 5 is a cross sectional schematic illustration of an upgradeable vehicle electronics system according to a third embodiment;
Figure 6 is a cross sectional schematic illustration of an upgradeable vehicle electronics system according to a fourth embodiment; and
Figure 7 is an isometric schematic illustration of the antenna positions in an upgradeable vehicle electronics system according to a fifth embodiment.

### Detailed Description

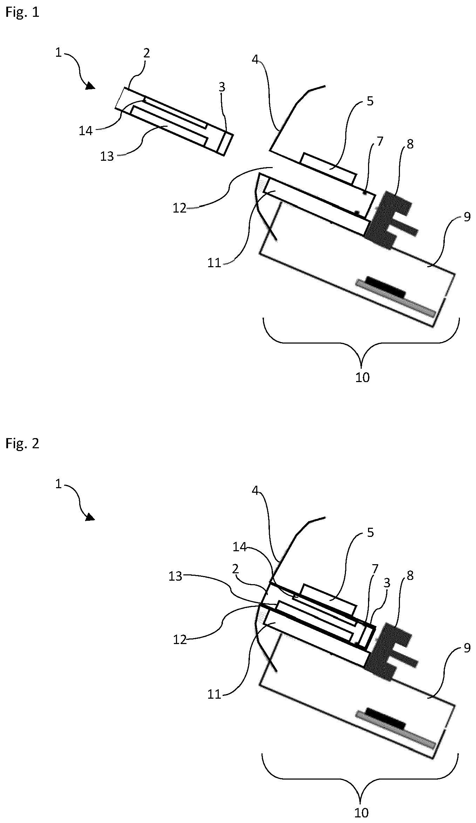

With reference to Figure 1, an upgradeable vehicle electronics system 1 according to a first embodiment is shown. In this embodiment, the system 1 is an automotive Multimedia Unit (MU) for implementing infotainment and other user experience (UX) functions. The system 1 includes an upgrade module 2 and a base unit 10.

The upgrade module 2 is provided as a hermetically sealed cartridge which can be inserted into a slot 12 provided in the base unit 10. The module 2 houses a plurality of electronic components for implementing UX functionality through the base unit 10, as well as a wireless charge receiver coil 13, a heat sink 14 and a WLAN transceiver 3. The wireless charge receiver coil 13 is located in the interior of the module casing, at the bottom of the module. The WLAN transceiver 3 is located at an insertion end of the module 2.

The heat sink 14 is thermally connected to the components within the interior of the module 2, and provides a thermal pathway from those components to an upper region of the module casing. In other embodiments, an internal heat spreading element may be used to distribute heat efficiently over the whole module to maximise transfer of heat away from hot components over a larger surface area.

The base unit 10 is fixed into the dashboard 4 of the vehicle and includes the slot 12 for receiving the upgrade module 2, a wireless charge transmitter coil 11, a cooling plate 5, and a WLAN transceiver 8. The base unit 10 also includes base processing section 9 which houses a plurality of electronic components for implementing the base UX functions. It will be understood that the base unit 10 may incorporate or be connected to a display and speakers, as well as other devices, controls, and sensors within the vehicle to implement those UX functions.

The slot 12 functions as a locator for the module 2 and incorporates a resilient retention formation 7 which is resiliently compressed when the module 2 is inserted into the slot 12, as shown in Figure 2. This acts to retain the module 2 within the slot and also dampen any vibrational forces applied through movement of the vehicle.

The base unit's wireless charge transmitter coil 11, cooling plate 5, and WLAN transceiver 8 are positioned relative to the slot 12 such that when the module 2 is inserted, as shown in Figure 2, these parts are aligned with their corresponding parts in the module 2. As such, the base unit's wireless charge transmitter coil 11 is located adjacent to the bottom surface of the slot 12, and the WLAN transceiver 8 is located adjacent to the terminal end of the slot 12. This minimises the distance between these parts to optimise their functional coupling and maximise performance.

In this connection, the WLAN transceivers 3 and 8 are operable to provide a high-speed, low-latency datalink between the components of the base unit 10 and the module 2. The datalink may include static control channels, low speed logical data channels and high speed (e.g. 0.5 Gbit/s ~ 10 GBps) logical data channels. In embodiments, the datalink may also be provided as an ASK modulated short distance radio link, with a carrier frequency in the twodigit GHz range. Although the WLAN protocol, as well as other wireless personal area network protocols, do not require precise alignment between the transceivers, the locating effect of the slot 12 allows higher speeds to be used, thereby minimising potential interference.

In the case of the wireless charging coils 11 and 13, these form an inductive coupling in the range of 50 to 500 kHz or resonance coupling in the frequency range of 3 to 30 MHz, primarily for transferring power from the base unit 10 to the module 2 for powering it during use. As such, both the module 2 and base unit 10 parts are equipped with coils that are operated close to resonance frequency and/or brought into a tight magnetic coupling. Typically, power transmission of operational power is achieved between 50 and 500 kHz or 3 to 30 MHz. In other embodiments, other wireless charging technologies may be used, such as capacitive wireless charging. At the same time, the power transfer coupling may also provide bidirectional communication between the wireless charging coil 11 in the base unit and the wireless charge receiver coil 13 in the upgrade module 2. For this, the charging coil arrangements each include a modulator/demodulator for modulating the power transfer signal to encode an additional, low speed, datalink. This is particularly useful for general control functionality, with the controller or processor in each of the module and base units being connected to the modulators/demodulators associated with the wireless power link coils 11,14.

In addition to the above, the cooling plate 5 also forms a region of the upper surface of the slot 12 for improving heat transfer away from the module 2 during use. As such, once the module 2 is inserted, the cooling plate 5 mates with the heat sink 14 for drawing heat therefrom. That is, waste heat from the module 2 is concentrated to the heatsink area and is, in turn, transferred to the cooling plate 5 for transport away to another part of the vehicle. In embodiments, the cooling plate 5 may include a fluid coolant transfer circuit to enhance cooling efficiency.

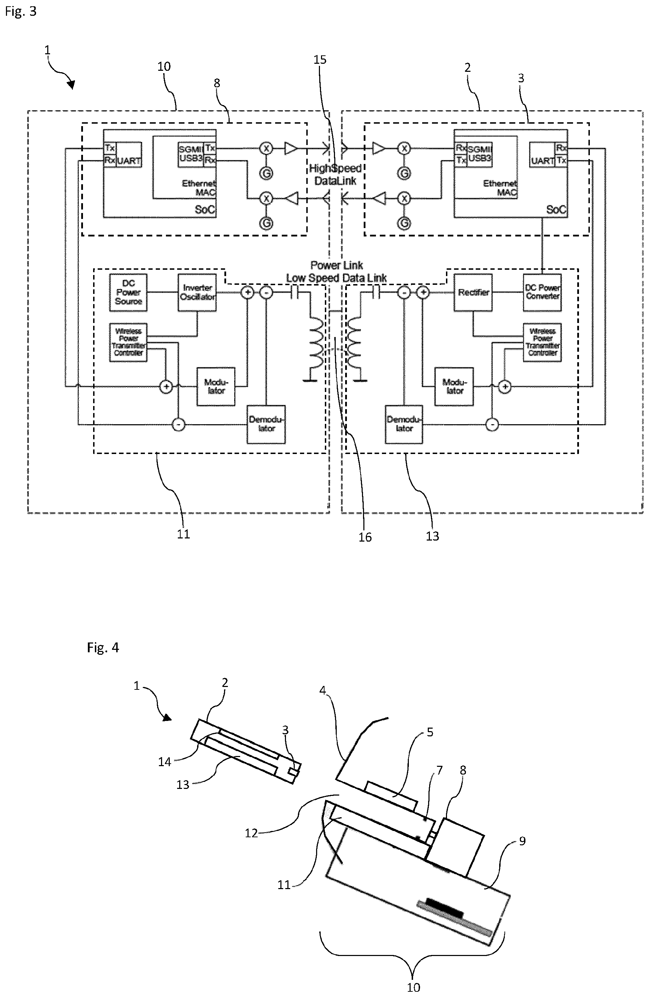

Figure 3 shows a simplified circuit diagram of the upgradeable vehicle electronics system 1 shown in Figures 1 and 2. As shown, with the upgrade module 2 located in the slot 12, a high-speed data link 15 can be established between their respective WLAN transceivers 3 and 8, and a power link/low speed data link 16 can be established between their respective wireless charging coils 11 and 13.

In use, the module 2 is located in the slot 12. During the boot sequence of the base unit 10, a low to medium energy is applied via the wireless charge transmitter coil 11, which transferers power to the module 2 for booting the components therein. This then triggers a initialising communication process in which control data is transmitted between the module and base for allowing the base unit 10 to recognise the presence of the module 2 and communicatively pair the parts. For this, diagnosis data is exchanged between the parts for setting communication protocols, operational parameters and power requirements. The base processing section 9 then enables high energy charging through the power link 16 for powering the enhanced functionality within the module 2. This results in booting of the System on Chip component within the module 2, and establishes the high-speed data link 15. The operational status of the high-speed data link 15 and the modules' SoC component may be periodically updated via the power link/lower speed data link 16.

With the above arrangement, the electronics system 1 may be upgraded by making use of the additional hardware components in the upgrade module 2. That is, once the high-speed datalink 15 has been established, the base processing section 9 may be communicatively connected to operate in conjunction with the components in the upgrade module 2. Importantly, this is not subject to the limitations of a physical electrical connection between the parts, and hence is more robust. This thereby allows for a multimedia unit to be upgraded to provide new functionality during the vehicle's lifespan.

It will be understood that the high-speed datalink 15 may be implemented using other communication protocols, such as other Wireless Personal Area Network technologies, for instance WiFi. In other embodiments, an optical connection or a microwave-link, such as a 60GHz communication channel, may be used.

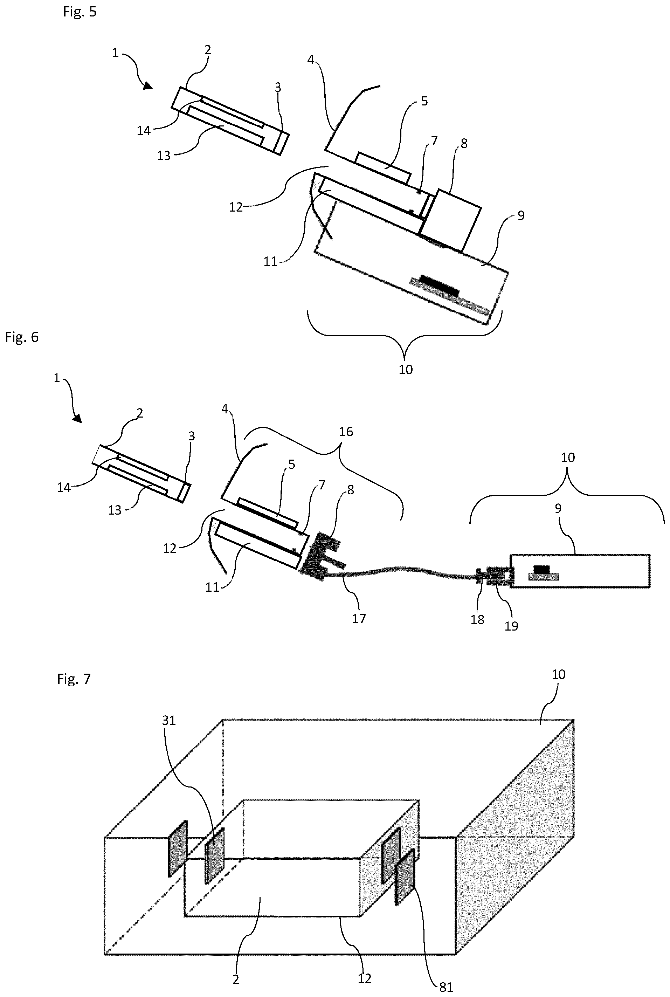

In this respect, Figure 4 shows a second embodiment which uses high-speed, bidirectional optical transceivers 3 and 8 to establish the high-speed datalink 15 between the module 2 and the base unit 10. In such an arrangement, the electrical signals are encoded into a modulated optical signal and are extracted back to an electrical signal on the receiver side. The remaining parts of the system 1 are the same as the first embodiment. Although in this second embodiment, more accurate alignment between the optical transceivers 3 and 8 is required compared to the WLAN transceivers in the first embodiment, it is nevertheless relatively tolerant to small movements between the parts. As such, a robust datalink may be maintained throughout operation of the module. Figure 5 similarly shows a third embodiment which uses two uni-directional directional GHz data links transceivers 3 and 8 to establish the high-speed datalink 15 between the module 2 and the base unit 10. Again, the remaining parts of the system are the same as the first embodiment.

Figure 6 shows a fourth embodiment which similarly uses WLAN transceivers to the first embodiment, but differs in that it has a module receiving part 16 that is provided separately to the base unit 10. That is, the module receiving part 16 houses the wireless power coil 11, the WLAN transceiver 11, the cooling plate 5, and the slot 12. The base processing section 9 is connected to the module receiving part 16 via a cable 17 which has a connector 18 that connects into a port 19 on the base processing part. This allows for greater flexibility in positioning, mounting, and cooling the upgrade module.

Figure 7 shows a fifth embodiment which makes use of a multiple-input and multiple-output (MIMO) methodology in the WLAN Band. That is, the base unit 10 incorporates a plurality of datalink antennas 81. In this embodiment two base datalink antennas 81 are provided, spatially distanced on either side of the slot 12. At the same time, the upgrade module 2 is provided with a corresponding plurality of datalink antennas 31, which become aligned with the base datalink antennas 81 when the module 2 is located in the slot 12 to form two antenna pairs. In combination, these allows several Rx and/or Tx channels to be implemented on the high-speed datalink 15. Furthermore, the fixed and defined spatial distribution of the antennas allows maximum decoupling between the channels. In other embodiments, slotlines and couplers may be used as an alternative to or a realisation of the MiMo antennas, and it will be understood that implementations are not limited to WLAN frequency bands and two MiMo Channels.

It will be understood that the embodiments illustrated above show applications only for the purposes of illustration. In practice, embodiments may be applied to many different configurations, the detailed embodiments being straightforward for those skilled in the art to implement.

For example, it will be understood that, although in the above illustrative embodiments the power link is modulated to provide a low speed data link, a channel for transmitting diagnostic data may also be implemented using other communication methods, such as Near-field communication (NFC), Ultra-wideband (UWB), Bluetooth (BT-LE).

Furthermore, it will also be understood that, although in the above illustrative embodiments the power link is provided as a wireless power link, the power link may alternatively use electrical contacts. For example, terminals on the base unit may engage with two isolated contact surfaces provided on the module, thereby allowing the module to be hermetically sealed, whilst also providing relatively good location tolerance.

Finally, it will also be understood that the upgrade module may further include a small, re-chargeable, energy store, such as a capacitor or battery for providing a buffer to allow diagnostic data communication before the wireless power transfer is established. In this way, an earlier synchronisation between module and base unit may be established, thereby allowing the system to be available to provide end-user functionality earlier in time after the module has been located. This may also, for instance, allow for diagnostic operations in the event that the module is located improperly or not located on the module locator at all (e.g. if left in a user's bag). In such a scenario, the module may be detected as present in the vehicle cabin but not plugged in, and an alert may be triggered to remind the user to locate the module.

## Claims

1. An upgradable vehicle electronics system (1) comprising:
a base unit (10) being operable in combination with an upgrade module (2);
a power transmitter (11) for delivering power to the module (2);
a base wireless data transceiver (8) for wireless communication between the base unit (10) and the module (2); and
a module locator (12) comprising a receptacle for receiving and securing the module (2);
wherein the power transmitter (11) and the base wireless data transceiver (8) are positioned relative to the module locator (12) such that when the module locator (12) receives and secures the module (2), a power receiver (13) on the module (2) is aligned with the power transmitter (11) to receive power therefrom, and a module wireless data transceiver (3) on the module (2) is aligned with the base wireless data transceiver (8) for wireless communication therebetween.

2. A vehicle electronics system (1) according to claim 1, further comprising the module (2), wherein the module locator (12) further comprises a cooling surface (5) for absorbing heat from the module (2).

3. A vehicle electronics system (1) according to any preceding claim, wherein the base unit (10) comprises a plurality of base electronic components for implementing base electronic functions and, when the module (2) is located in the module locator (12), upgrade electronic components in the module (2) are operable in combination with the base electronic components for implementing upgraded electronic functions.

4. A upgradable vehicle electronics system (1) according to any preceding claim, wherein the power transmitter (11) is a wireless power transmitter (11).

5. A vehicle electronics system (1) according to claim 4, wherein the wireless power transmitter (11) comprises a data transfer modulator for transferring data between the power receiver (13) and the power transmitter (11).

6. A vehicle electronics system (1) according to any preceding claim, wherein the base wireless data transceiver (8) comprises a plurality of antennas (81) for communication with a plurality of antennas (31) of the module wireless data transceiver (3) using a Multiple-Input Multiple-Output method.

7. A vehicle electronics system (1) according to any preceding claim, wherein the base (8) and module wireless data transceivers (3) communicate using one of a radio-frequency link, a wireless personal area network, a microwave link, an optical link, and a two digit GHz data link.

8. A vehicle electronics system (1) according to any preceding claim, further comprising a module receiving part (16) for housing the power transmitter (11), the base wireless data transceiver (11), and the module locator (12), and
wherein the module receiving part (16) is electrically connected to the base unit (10) through a cable connector (18).

9. An upgrade module (2) for an upgradable vehicle electronics system (1) comprising:
a power receiver (13) for receiving power from the system (1); and
a module wireless data transceiver (3) for wireless communication between the upgrade module (2) and a base unit (10) of the system operable in combination with the upgrade module (2),
wherein the upgrade module (2) is configured to be inserted into and secured by a module locator (12) of the base unit (10), and the power receiver (13) and the module wireless data transceiver (3) are located on the module (2) such that, when the upgrade module (2) is secured by the module locator (12), the power receiver (13) is aligned with a power transmitter (11) of the system (1) to receive power therefrom and the module wireless data transceiver (3) is aligned with a base wireless data transceiver (8) for wireless communication therebetween.

10. An upgrade module (2) according to claim 9, wherein the power receiver (13) is a wireless power receiver (13) and comprises a data transfer modulator for transferring data between the power receiver (13) and the power transmitter (11).

11. An upgrade module (2) according to any of claims 9 or 10, further comprising a heat dissipation region (14) for conducting heat from components in the upgrade module (2) to a cooling surface (5) provided in the module locator (12) when the upgrade module (2) is located in the module locator (12).

12. An upgrade module according to any of claims 9 to 10, further comprising a rechargeable energy store for powering components within the module (2) prior to the power receiver (13) receiving power from the system (1).

13. A method of upgrading a vehicle electronics system (1) comprising the steps of:
providing an upgrade module (2) having a power receiver (13) and a module wireless data transceiver (3);
providing a base unit (10) operable in combination with the upgrade module (2), a power transmitter (11), a base wireless data transceiver (8), and a module locator (12) for the upgrade module (2), wherein the module locator (12) comprises a receptacle for receiving and securing the upgrade module (2); and
locating the upgrade module (2) in the module locator (12);
wherein the power transmitter (11) and the base wireless data transceiver (8) are positioned relative to the module locator (12) such that when the module locator (12) receives and secures the upgrade module (2), a power receiver (13) on the module (2) is aligned with the power transmitter (11) for receiving power therefrom and a wireless data transceiver (3) on the module (2) is aligned with the base wireless data transceiver (8) for wireless communication therebetween.

14. A method according to claim 13, further comprising the steps of:
transmitting power from the power transmitter (11) to the power receiver (13) for powering components in the upgrade module (2);
modulating the power transmitted for transferring initialisation data between the power receiver (13) and the power transmitter (11);
processing the initialisation data using the powered components in the upgrade module (2); and
activating the module wireless data transceiver (3) based on the processed initialisation data to establish wireless communications with the base wireless data transceiver (8).

## Patentansprüche

1. Aufrüstbares Fahrzeugelektroniksystem (1), umfassend:
Eine Basiseinheit (10), die in Kombination mit einem Aufrüstmodul (2) funktionsfähig ist;
einen Leistungstransmitter (11) zur Lieferung von Leistung an das Modul (2);
einen drahtlosen Basis-Datensendeempfänger (8) für die drahtlose Kommunikation zwischen der Basiseinheit (10) und dem Modul (2); und
einen Modul-Locator (12), der ein Fach für die Aufnahme und Befestigung des Moduls (2) umfasst;
wobei der Leistungstransmitter (11) und der drahtlose Basis-Datensendeempfänger (8) relativ zu dem Modul-Locator (12) positioniert sind, so dass, wenn der Modul-Locator (12) das Modul (2) aufnimmt und befestigt, ein Leistungsempfänger (13) an dem Modul (2) an dem Leistungstransmitter (11) ausgerichtet wird, um die Leistung davon aufzunehmen, und ein drahtloser Modul-Datensendeempfänger (3) an dem Modul (2) an dem drahtlosen Basis-Datensendeempfänger (8) für eine drahtlose Kommunikation dazwischen ausgerichtet wird.

2. Fahrzeugelektroniksystem (1) nach Anspruch 1, ferner umfassend das Modul (2), wobei der Modul-Locator (12) ferner eine Kühlfläche (5) umfasst, um die Hitze von dem Modul (2) zu absorbieren.

3. Fahrzeugelektroniksystem (1) nach einem der vorstehenden Ansprüche, wobei die Basiseinheit (10) eine Vielzahl von elektronischen Basiskomponenten für das Implementieren von elektronischen Basisfunktionen umfasst und, wenn das Modul (2) in dem Modul-Locator (12) platziert ist, elektronische Aufrüstkomponenten in dem Modul (2) in Kombination mit den elektronischen Basiskomponenten funktionsfähig sind, elektronische Aufrüstfunktionen zu implementieren.

4. Aufrüstbares Fahrzeugelektroniksystem (1) nach einem der vorstehenden Ansprüche, wobei der Leistungstransmitter (11) ein drahtloser Leistungstransmitter (11) ist.

5. Fahrzeugelektroniksystem (1) nach Anspruch 4, wobei der drahtlose Leistungstransmitter (11) einen Datenübertragungsmodulator für das Übertragen von Daten zwischen dem Leistungsempfänger (13) und dem Leistungstransmitter (11) umfasst.

6. Fahrzeugelektroniksystem (1) nach einem der vorstehenden Ansprüche, wobei der drahtlose Basis-Datensendeempfänger (8) eine Vielzahl von Antennen (81) für eine Kommunikation mit einer Vielzahl von Antennen (31) des drahtlosen Modul-Datensendeempfängers (3) unter Verwendung eines Multiple-Input-Multiple-Output-Verfahrens umfasst.

7. Fahrzeugelektroniksystem (1) nach einem der vorstehenden Ansprüche, wobei der drahtlose Basis- (8) und der Modul-Datensendeempfänger (3) unter Verwendung einer Radiofrequenz-Verbindung, eines drahtlosen Personal Area Networks, einer Mikrowellenverbindung, einer optischen Verbindung oder einer zwei-stelligen Ghz-Datenverbindung kommunizieren.

8. Fahrzeugelektroniksystem (1) nach einem der vorstehenden Ansprüche, ferner umfassend ein Modul-Aufnahmeteil (16) für das Einbauen des Leistungstransmitters (11), des drahtlosen Basis-Datensendeempfängers (11) und des Modul-Locators (12), und
wobei das Modul-Aufnahmeteil (16) elektrisch mit der Basiseinheit (10) über einen Kabelstecker (18) verbunden ist.

9. Aufrüstmodul (2) für ein aufrüstbares Fahrzeugelektroniksystem (1), umfassend:
einen Leistungstransmitter (13) zum Empfangen von Leistung von dem System (1); und
einen drahtlosen Modul-Datensendeempfänger (3) für die drahtlose Kommunikation zwischen dem Aufrüstmodul (2) und einer Basiseinheit (10) des Systems, der in Kombination mit dem Aufrüstmodul (2) funktionsbereit ist,
wobei das Aufrüstmodul (2) so konfiguriert ist, dass es in einen Modul-Locator (12) der Basiseinheit (10) eingesetzt und befestigt werden kann, und der Leistungsempfänger (13) und der drahtlose Modul-Datensendeempfänger (3) so an dem Modul (2) platziert sind, dass, wenn das Aufrüstmodul (2) durch den Modul-Locator (12) befestigt ist, der Leistungsempfänger (13) an einem Leistungstransmitter (11) des Systems (1) ausgerichtet wird, um Leistung davon zu empfangen, und der drahtlose Modul-Datensendeempfänger (3) an einem drahtlosen Basis-Datensendeempfänger (8) für eine drahtlose Kommunikation dazwischen ausgerichtet wird.

10. Aufrüstmodul (2) nach Anspruch 9, wobei der Leistungsempfänger (13) ein drahtloser Leistungsempfänger (13) ist und einen Datenübertragungsmodulator für das Übertragen von Daten zwischen dem Leistungsempfänger (13) und dem Leistungstransmitter (11) umfasst.

11. Aufrüstmodul (2) nach einem der Ansprüche 9 oder 10, ferner umfassend einen Wärmeabfuhrbereich (14) für das Ableiten von Wärme von den Komponenten in dem Aufrüstmodul (2) zu einer Kühlfläche (5), die in dem Modul-Locator (12) bereitgestellt wird, wenn das Aufrüstmodul (2) in dem Modul-Locator (12) platziert ist.

12. Aufrüstmodul nach einem der Ansprüche 9 bis 10, ferner umfassend einen wiederaufladbaren Energiespeicher für das Versorgen von Komponenten innerhalb des Moduls (2) mit Energie bevor der Leistungsempfänger (13) Leistung von dem System (1) empfängt.

13. Verfahren zur Aufrüstung eines Fahrzeugelektroniksystems (1), die folgenden Schritte umfassend:
Bereitstellen eines Aufrüstmoduls (2) mit einem Leistungsempfänger (13) und einem drahtlosen Modul-Datensendeempfänger (3);
Bereitstellen einer Basiseinheit (10), die in Kombination mit dem Aufrüstmodul (2), einem Leistungstransmitter (11), einem drahtlosen Basis-Datensendeempfänger (8) und einem Modul-Locator (12) für das Aufrüstmodul (2) funktionsfähig ist, wobei der Modul-Locator (12) ein Fach für das Aufnehmen und Befestigen des Aufrüstmoduls (2) umfasst; und
Platzieren des Aufrüstmoduls (2) in dem Modul-Locator (12);
wobei der Leistungstransmitter (11) und der drahtlose Basis-Datensendeempfänger (8) relativ zu dem Modul-Locator (12) positioniert sind, so dass, wenn der Modul-Locator (12) das Aufrüstmodul (2) aufnimmt und befestigt, ein Leistungsempfänger (13) an dem Modul (2) an dem Leistungstransmitter (11) ausgerichtet wird, um die Leistung davon aufzunehmen, und ein drahtloser Modul-Datensendeempfänger (3) an dem Modul (2) an dem drahtlosen Basis-Datensendeempfänger (8) für eine drahtlose Kommunikation dazwischen ausgerichtet wird.

14. Verfahren nach Anspruch 13, das ferner die folgenden Schritte umfasst:
Übertragen von Leistung von dem Leistungstransmitter (11) an den Leistungsempfänger (13) für das Versorgen von Komponenten in dem Aufrüstmodul (2) mit Energie;
Modulieren der für das Übertragen von Initialisierungsdaten zwischen dem Leistungsempfänger (13) und dem Leistungstransmitter (11) weitergeleiteten Leistung;
Verarbeiten der Initialisierungsdaten unter Verwendung der mit Energie versorgten Komponenten in dem Aufrüstmodul (2); und
Aktivieren des drahtlosen Modul-Datensendeempfängers (3), basierend auf den verarbeiteten Initialisierungsdaten, um drahtlose Kommunikationen mit dem drahtlosen Basis-Datensendeempfänger (8) einzurichten.

## Revendications

1. Système électronique de véhicule évolutif (1) comprenant :
une unité de base (10) exploitable conjointement avec un module de mise à niveau (2) ;
un émetteur de puissance (11) destiné à fournir de la puissance au module (2) ;
un émetteur-récepteur de données sans fil de base (8) destiné à une communication sans fil entre l'unité de base (10) et le module (2) ; et
un localisateur de module (12) comprenant un réceptacle destiné à recevoir et à sécuriser le module (2) ;
dans lequel l'émetteur de puissance (11) et l'émetteur-récepteur de données sans fil de base (8) sont positionnés par rapport au localisateur de module (12) de sorte que, lorsque le localisateur de module (12) reçoit et sécurise le module (2), un récepteur de puissance (13) sur le module (2) est aligné avec l'émetteur de puissance (11) pour recevoir la puissance provenant de celui-ci et un émetteur-récepteur de données sans fil de module (3) sur le module (2) est aligné avec l'émetteur-récepteur de données sans fil de base (8) destiné à la communication sans fil entre ceux-ci.

2. Système électronique de véhicule (1) selon la revendication 1, comprenant en outre le module (2), dans lequel le localisateur de module (12) comprend en outre une surface de refroidissement (5) destinée à absorber la chaleur provenant du module (2).

3. Système électronique de véhicule (1) selon une quelconque revendication précédente, dans lequel l'unité de base (10) comprend une pluralité de composants électroniques de base destinés à mettre en œuvre des fonctions électroniques de base et, lorsque le module (2) est situé dans le localisateur de module (12), les composants électroniques de mise à niveau dans le module (2) sont exploitables conjointement avec les composants électroniques de base destinées à mettre en œuvre les fonctions électroniques de mise à niveau.

4. Système électronique de véhicule évolutif (1) selon une quelconque revendication précédente, dans lequel l'émetteur de puissance (11) est un émetteur de puissance sans fil (11).

5. Système électronique de véhicule (1) selon la revendication 4, dans lequel l'émetteur de puissance sans fil (11) comprend un modulateur de transfert de données destiné à transférer les données entre le récepteur de puissance (13) et l'émetteur de puissance (11).

6. Système électronique de véhicule (1) selon une quelconque revendication précédente, dans lequel l'émetteur-récepteur de données sans fil de base (8) comprend une pluralité d'antennes (81) destinées à la communication avec une pluralité d'antennes (31) de l'émetteur-récepteur de données sans fil de module (3) à l'aide d'un procédé à entrées multiples et sorties multiples.

7. Système électronique de véhicule (1) selon une quelconque revendication précédente, dans lequel la base (8) et les émetteurs-récepteurs de données sans fil de module (3) communiquent à l'aide d'une liaison radiofréquence, d'un réseau local personnel sans fil, d'une liaison hyperfréquence, d'une liaison optique et d'une liaison de données GHz à deux chiffres.

8. Système électronique de véhicule (1) selon une quelconque revendication précédente, comprenant en outre une partie de réception de module (16) destinée à loger l'émetteur de puissance (11), l'émetteur-récepteur de données sans fil de base (11) et le localisateur de module (12), et
dans lequel la partie de réception de module (16) est connectée électriquement à l'unité de base (10) au moyen d'un connecteur de câble (18).

9. Module de mise à niveau (2) destiné à un système électronique de véhicule évolutif (1) comprenant :
un récepteur de puissance (13) destiné à recevoir la puissance provenant du système (1) ; et
un émetteur-récepteur de données sans fil de module (3) destiné à la communication sans fil entre le module de mise à niveau (2) et une unité de base (10) du système exploitable conjointement avec le module de mise à niveau (2),
dans lequel le module de mise à niveau (2) est conçu pour être inséré et sécurisé par un localisateur de module (12) de l'unité de base (10) et le récepteur de puissance (13) et l'émetteur-récepteur de données sans fil de module (3) sont situés sur le module (2) de sorte que, lorsque le module de mise à niveau (2) est sécurisé par le localisateur de module (12), le récepteur de puissance (13) est aligné avec un émetteur de puissance (11) du système (1) pour recevoir la puissance et provenant de celui-ci et l'émetteur-récepteur de données sans fil du module (3) est aligné avec un émetteur-récepteur de données sans fil de base (8) destiné à la communication sans fil entre eux.

10. Module de mise à niveau (2) selon la revendication 9, dans lequel le récepteur de puissance (13) est un récepteur de puissance sans fil (13) et comprend un modulateur de transfert de données destiné à transférer les données entre le récepteur de puissance (13) et l'émetteur de puissance (11).

11. Module de mise à niveau (2) selon l'une quelconque des revendications 9 ou 10, comprenant en outre une région de dissipation de chaleur (14) destinée à conduire la chaleur provenant des composants dans le module de mise à niveau (2) vers une surface de refroidissement (5) prévue dans le localisateur de module (12) lorsque le module de mise à niveau (2) est situé dans le localisateur de module (12).

12. Module de mise à niveau selon l'une quelconque des revendications 9 à 10, comprenant en outre un accumulateur d'énergie rechargeable destiné à alimenter les composants à l'intérieur du module (2) avant que le récepteur de puissance (13) reçoive la puissance provenant du système (1).

13. Procédé de mise à niveau d'un système électronique de véhicule (1) comprenant les étapes consistant à :
fournir un module de mise à niveau (2) présentant un récepteur de puissance (13) et un émetteur-récepteur de données sans fil de module (3) ;
fournir une unité de base (10) exploitable conjointement avec le module de mise à niveau (2), un émetteur de puissance (11), un émetteur-récepteur de données sans fil de base (8) et un localisateur de module (12) destiné au module de mise à niveau (2), dans lequel le localisateur de module (12) comprend un réceptacle destiné à recevoir et à sécuriser le module de mise à niveau (2) ; et
localiser le module de mise à niveau (2) dans le localisateur de module (12) ;
dans lequel l'émetteur de puissance (11) et l'émetteur-récepteur de données sans fil de base (8) sont positionnés par rapport au localisateur de module (12) de sorte que, lorsque le localisateur de module (12) reçoit et sécurise le module de mise à niveau (2), un récepteur de puissance (13) sur le module (2) est aligné avec l'émetteur de puissance (11) destiné à recevoir la puissance provenant de celui-ci et un émetteur-récepteur de données sans fil (3) sur le module (2) est aligné avec l'émetteur-récepteur de données sans fil de base (8) destiné à la communication sans fil entre ceux-ci.

14. Procédé selon la revendication 13 comprenant en outre les étapes consistant à :
transmettre la puissance à partir de l'émetteur de puissance (11) vers le récepteur de puissance (13) destinée à alimenter les composants du module de mise à niveau (2) ;
moduler la puissance transmise destinée à transférer les données d'initialisation entre le récepteur de puissance (13) et l'émetteur de puissance (11) ;
traiter les données d'initialisation à l'aide des composants alimentés dans le module de mise à niveau (2) ; et
activer l'émetteur-récepteur de données sans fil de module (3) en fonction des données d'initialisation traitées pour établir des communications sans fil avec l'émetteur-récepteur de données sans fil de base (8).
